# FASCICULE DE BREVET EUROPEEN

(11) **EP 1 017 148 B1**
(45) Date de publication et mention de la délivrance du brevet: **22.09.2010**
(21) Numéro de dépôt: 99204468.5
(22) Date de dépôt: 22.12.1999
(51) Int. Cl.: H02J 7/00

(54) **Appareil électrique comportant un accumulateur et procédé pour détecter le débranchement d'un accumulateur**
Elektrische Vorrichtung, die eine Batterie beinhaltet und Verfahren zum Erkennen der Trennung von einer Batterie
Electrical device including a battery and method for detecting the disconnection of a battery

(30) Priorité: 29.12.1998 FR 9816568
(43) Date de publication de la demande: 05.07.2000
(73) Titulaire: NXP B.V., 5656 AG Eindhoven (NL)
(72) Inventeur: Ricordel, Eloi, 75008 Paris (FR)
(74) Mandataire: Zapalowicz, Francis

(56) Documents cités:
- EP-A- 0 865 140
- GB-A- 2 270 445
- US-A- 5 631 538

## Description

La présente invention concerne un appareil électrique muni d'accès d'alimentation pour être alimenté par un accumulateur.

L'invention concerne aussi un procédé pour détecter le débranchement ou le changement d'un accumulateur.

De tels appareils sont bien connus et trouvent de nombreuses applications, notamment dans le domaine des appareils de téléphonie portables qui sont alimentés par un accumulateur dont l'état de charge nécessite d'être très bien contrôlé.

Le document de brevet des Etats Unis d'Amérique n° 5 349 280 décrit un circuit destiné à protéger un accumulateur parmi tant d'autres.

La demande de brevet Britannique publiée sous le n° GB 2 270 445 décrit un téléphone mobile alimenté par un accumulateur. Le téléphone mobile comprend un commutateur qui détecte un mouvement de l'accumulateur. Dans le cas où l'accumulateur du téléphone mobile est remplacé, le commutateur provoque une interruption de l'unité de contrôle à microprocesseur. L'interruption notifie cette unité que la tension d'alimentation va être coupée durant le remplacement de l'accumulateur. Des données pertinentes peuvent alors être stockées dans une mémoire de type EEPROM.

Le document de brevet des Etats Unis d'Amérique n° 5 631 538 décrit un procédé pour charger un accumulateur dans lequel un courant de charge est périodiquement interrompu. Ainsi, un dispositif peut s'éteindre avant que ces circuits ou composants soient endommagés dans le cas où un accumulateur est retiré. Un programme de charge peut être remis à zéro dans le cas où l'accumulateur est remplacé.

La présente invention propose un appareil dans lequel des mesures de charge et/ou de décharge de l'accumulateur sont prises. Cependant ces mesures peuvent être prises en défaut si l'accumulateur est changé par l'utilisateur pour des raisons variées.

Ainsi, par l'invention, on est assuré que l'état de charge et/ou de décharge de l'accumulateur est bien connu ce qui assure une meilleur longévité à ces organes du fait que leur mise en charge peut être faite à bon escient.

Les revendications 1 et 3 définissent un appareil et un procédé selon l'invention qui permettent d'éviter de fausser les mesures de charge et/ou de décharge d'un accumulateur lors du changement de celui-ci.

La description suivante, faite en regard des dessins ci-annexés, le tout donné à titre d'exemple non limitatif, fera bien comprendre comment l'invention peut être réalisée.
La figure 1 montre un système comportant au moins un appareil conforme à l'invention.
La figure 2 montre le schéma d'un appareil conforme à l'invention.
La figure 3 montre le schéma d'un détecteur de changement d'accumulateur.
La figure 4 montre un diagramme temps explicitant le fonctionnement de l'invention.
La figure 5 montre un organigramme explicitant le fonctionnement de l'invention.

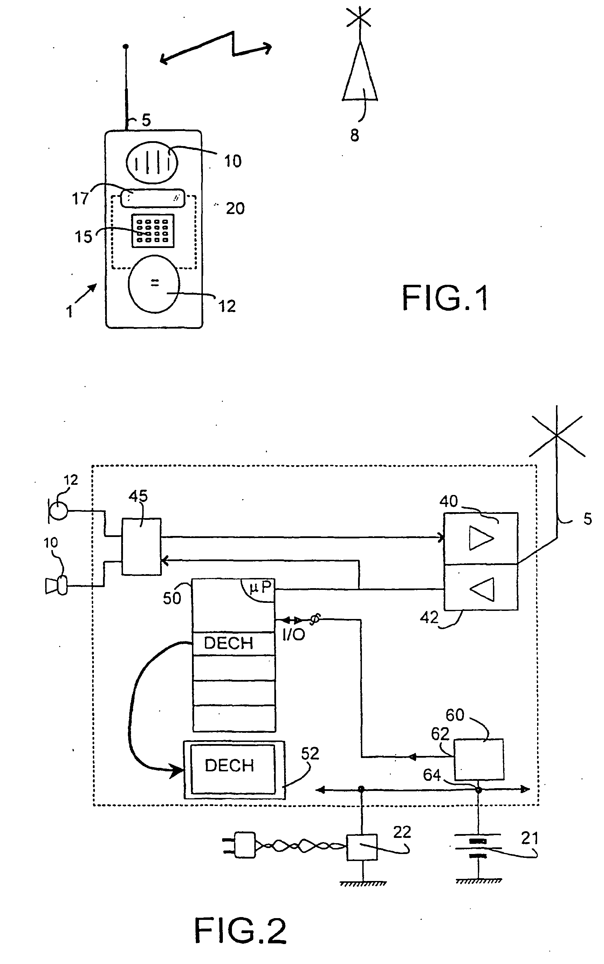

A la figure 1, la référence 1 indique un appareil conforme à l'invention. Dans cet exemple décrit c'est une station mobile appartenant à un système téléphonique sans fil formé d'un réseau de type cellulaire. Cette station est munie d'une antenne 5 qui lui permet de recevoir et d'émettre des ondes vers une station de base 8 d'un réseau radioélectrique du genre téléphonie cellulaire GSM, AMPS, et autres. La station mobile 1 comporte un écouteur 10, un microphone 12, un clavier 15 et un écran de visualisation 17. Les pointillés représentent une partie électronique 20 située à l'intérieur du poste. Cette partie 20 est alimentée soit par un accumulateur 21 soit par une alimentation 22 reliée au secteur. Cette partie est montrée plus en détail à la figure 2. Elle comprend un ensemble d'émission 40 et un ensemble de réception 42 pour émettre et pour recevoir différentes informations usuelles dans la technique de la téléphonie cellulaire. Ces parties émission et réception sont reliées à un microphone 12 et à l'écouteur 10 via un organe de traitement de parole 45. La gestion d'une telle station mobile est assurée par un ensemble à microprocesseur 50.

Il est important de surveiller l'état de charge de l'accumulateur 21. Pour cela, un compteur de charge et de décharge DECH géré par l'ensemble 50 mesure le temps d'utilisation de l'appareil. A la mise en route de l'appareil, la présence de l'accumulateur est testée et le compteur DECH se met à compter des périodes de temps. Le contenu de ce compteur détermine l'état de charge de l'accumulateur. Lorsque l'on éteint la station, le contenu de ce compteur est enregistré dans une mémoire 52 de type non volatile (mémoire EEPROM). L'ensemble 50 comporte un accès I/O qui peut être programmé en borne de sortie ou en borne d'entrée comme cela est bien connu dans la technique.

Le problème qui survient alors est que, si l'accumulateur en place est changé par un autre accumulateur plus ou moins bien chargé, le contenu du compteur DECH n'est plus cohérent avec la charge du dernier accumulateur mis en place. Pour éviter ce problème, l'invention propose un détecteur de changement d'accumulateur 60. Ce détecteur est muni d'un accès d'entrée-sortie 62 destiné à être relié audit accès de l'ensemble 50 et aussi d'une borne d'entrée 64 qui est reliée à un pôle de l'accumulateur 21.

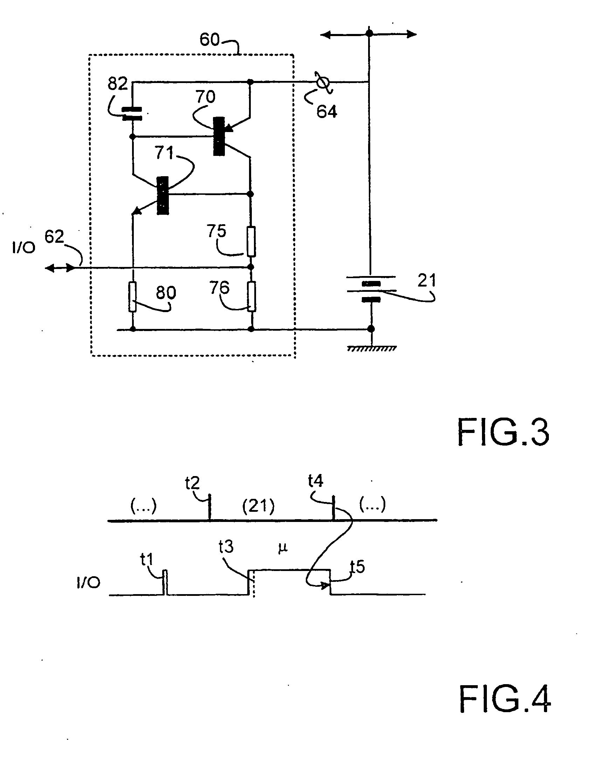

Le détail de réalisation de ce détecteur de changement d'accumulateur est montré à la figure 3.

Il se compose de deux transistors 70 et 71 dont le comportement peut s'assimiler à un circuit interrupteur. L'émetteur du transistor 70 est relié au pôle positif de l'accumulateur 21 tandis que son collecteur est relié à la masse par l'intermédiaire d'un diviseur de tension formé par des résistances 75 et 76. C'est le point commun de ces deux résistances qui constitue l'accès 62. L'émetteur du transistor 71 est relié à la masse par l'intermédiaire d'une résistance 80. Le collecteur est relié, d'une part au pôle positif de l'accumulateur 21, par l'intermédiaire d'un condensateur 82 et d'autre part à la base du transistor 70. La base du transistor 71 est reliée au collecteur du transistor 70.

A titre d'exemple les résistances 75, 76 et 80 ont toutes une valeur de l'ordre de 1,8 Mohms et le condensateur a une valeur de 1nF.

Le fonctionnement d'un tel détecteur est expliqué à l'aide de la figure 4. Ce détecteur fonctionne à l'aide de l'accès I/O de l'ensemble 50. Quand l'accumulateur est placé et que l'accès I/O est inactif, le transistor 71 ne reçoit aucune polarisation sur sa base, il ne conduit pas. En conséquence, le transistor 70 est bloqué. Une impulsion sur la base du transistor 71 rend conducteur le transistor 71 . Si un accumulateur est branché à la borne 64, le condensateur 82 se charge, ce qui rend conducteur le transistor 70. Il existe donc un niveau élevé à l'accès 62 ; cet accès prend alors la valeur logique " 1 " dite positive. Si on débranche l'accumulateur 21, le condensateur 82 se décharge dans la jonction base émetteur du transistor 70, la borne 62 se retrouve alors au potentiel de masse. Le condensateur déchargé évite que le transistor 70 ne devienne trop vite conducteur, ainsi on évite les effets néfastes des microcoupures dues à des mauvals contacts au niveau du connecteur de l'accumulateur.

Le fonctionnement s'explique maintenant à l'aide de la figure 4. L'instant t1 est l'apparition d'une impulsion émise sur l'accès I/O alors que l'accumulateur 21 est débranché, la tension à l'accès I/O après la fourniture de l'impulsion est alors au niveau de la masse. A l'instant t2, l'accumulateur 21 est remis en service. La tension à l'accès I/O reste nulle tant que l'impulsion n'est pas fournie. Après l'apparition de cette impulsion à l'instant t3 la tension à l'accès I/O prend une valeur élevée. Puis, on admet qu'à l'instant t4 l'accumulateur 21 est enlevé. Par suite de la décharge du condensateur 82, la tension à l'accès I/O, prend la valeur 〈〈 0 〉〉 à l'instant t5.

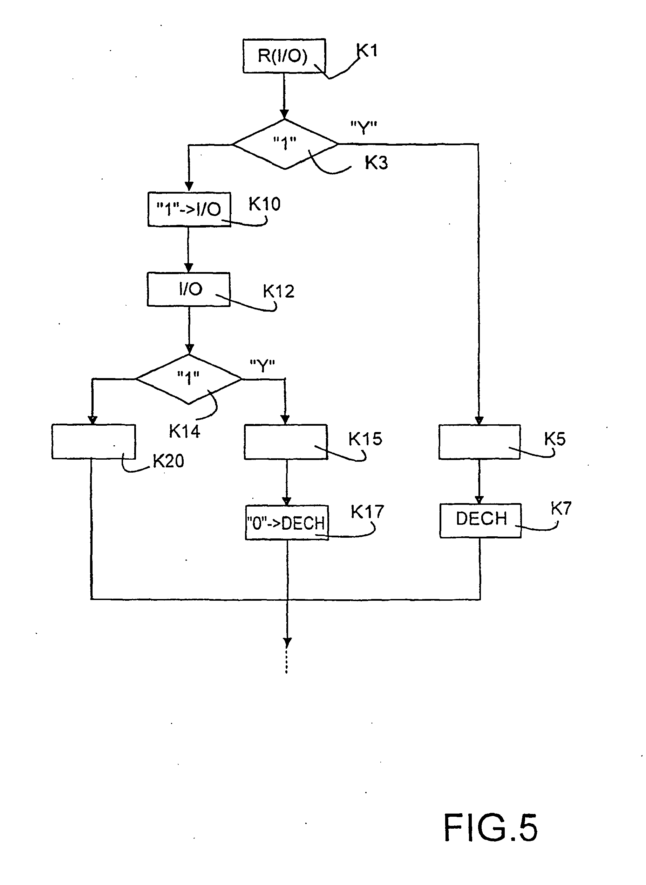

L'organigramme de la figure 5 montre comment un dialogue peut s'instaurer entre l'ensemble 50 et le détecteur 60.

La case K1 de cet organigramme indique la lecture de la tension à l'accès I/O qui survient à la mise en service de l'appareil. Si cette valeur est " 1 " case K3, alors on estime que l'accumulateur n'a pas été changé, case K5. Le contenu du compteur DECH est initialisé par sa valeur contenue dans la mémoire non volatile 52, case K7.

Si le test de la case K3 indique une tension nulle alors une impulsion est fournie à l'accès I/O, case K10. Puis on lit la tension à la case K12. Un test est alors effectué, case K14. Si une tension est présente, alors on a affaire à un nouvel accumulateur, case K15, le contenu du compteur DECH est donc re-initialisé, case K17. Si la tension est nulle, alors il n'y a pas d'accumulateur, case K20. L'appareil fonctionne alors sur l'alimentation secteur 22.

Il est à remarquer, figure 3, que l'accès 62 peut être divisé en deux. Il est possible de lire l'état de charge du condensateur 82 en mesurant directement la tension à ses armatures, l'impulsion qui autorise la connexion de ce condensateur à l'accumulateur étant appliquée au point commun des résistances 75 et 76.

## Revendications

1. Appareil électrique muni d'un accès d'alimentation pour être alimenté par un accumulateur (21) et prévu d'un circuit détecteur de changement d'accumulateur (60), **caractérisé en ce que** l'appareil électrique comporte:
- un compteur de charge et de décharge (DECH) pour déterminer l'état de charge et/ou de décharge dudit accumulateur en mesurant le temps d'utilisation de l'appareil,
- des moyens (50) pour réinitialiser ledit compteur de charge et de décharge à l'apparition d'un signal actif fourni par le circuit détecteur de changement d'accumulateur lorsqu'un changement d'accumulateur est détecté.

2. Appareil selon la revendication 1 **caractérisé en ce que** ledit circuit détecteur de changement d'accumulateur (60) comprend :
- un condensateur (82),
- des moyens de commutation (70, 71) pour connecter le condensateur à l'accès d'alimentation quand un signal d'autorisation est appliqué au circuit détecteur de changement d'accumulateur,
- un accès (62) pour fournir une valeur logique « 0 » ou « 1 » respectivement lorsque ledit condensateur est déchargé ou chargé, une transition de la valeur logique de « 0 » à « 1 » constituant ledit signal actif.

3. Procédé pour détecter un changement d'accumulateur alimentant un appareil électrique selon la revendication 2, **caractérisé en ce que** le procédé comprend les étapes suivantes:
- une première lecture (K3) de la valeur logique à l'accès du circuit détecteur de changement d'accumulateur,
- indication de la présence d'un accumulateur (K5) si la valeur logique est égale à«1»,
- fourniture d'une impulsion (K10) si la valeur logique est égale à « 0 »,
- une deuxième lecture (K14) de la valeur logique à l'accès du circuit détecteur de changement d'accumulateur après la fourniture de l'impulsion,
- réinitialisation dudit compteur de charge et décharge (K17) si la valeur logique est égale à « 1 », .
- indication de l'absence d'accumulateur (K20) si la valeur logique est égale à «0».

4. Produit de programme d'ordinateur pour un microprocesseur (50) dans un appareil électrique selon la revendication 2, le produit de programme d'ordinateur comprenant un jeu d'instructions qui, étant chargé dans le microprocesseur, permet au microprocesseur d'effectuer le procédé selon la revendication 3.

## Claims

1. Electrical appliance provided with a power supply port to be powered by a battery (21) and provided with a battery change detector circuit (60), **characterized in that** the electrical appliance comprises:
- a charge and discharge counter (DECH) for determining the state of charge and/or of discharge of said battery by measuring the usage time of the appliance,
- means (50) for resetting said charge and discharge counter upon the appearance of an active signal supplied by the battery change detector circuit when a change of battery is detected.

2. Appliance according to Claim 1, **characterized in that** said battery change detector circuit (60) comprises:
- a capacitor (82),
- switching means (70, 71) for connecting the capacitor to the power supply port when an enable signal is applied to the battery change detector circuit,
- a port (62) for supplying a "0" or "1" logic value respectively when said capacitor is discharged or charged, a transition of the logic value from "0" to "1" constituting said active signal.

3. Method for detecting a change of battery powering an electrical appliance according to Claim 2, **characterized in that** the method comprises the following steps:
- a first read (K3) of the logic value at the port of the battery change detector circuit,
- indication of the presence of a battery (K5) if the logic value is equal to "1",
- provision of a pulse (K10) if the logic value is equal to "0",
- a second read (K14) of the logic value at the port of the battery change detector circuit after the provision of the pulse,
- resetting of said charge and discharge counter (K17) if the logic value is equal to "1",
- indication of the absence of battery (K20) if the logic value is equal to "0".

4. Computer programme product for a microprocessor (50) in an electrical appliance according to Claim 2, the computer programme product comprising an instruction set which, when loaded into the microprocessor, enables the microprocessor to perform the method according to Claim 3.

## Patentansprüche

1. Elektrisches Gerät, das mit einem Versorgungszugang ausgestattet ist, um von einem Akkumulator (21) versorgt zu werden, und mit einer Akkumulatorwechsel-Erfassungsschaltung (60) versehen ist, **dadurch gekennzeichnet, dass** das elektrische Gerät aufweist:
- einen Lade- und Entladezähler (DECH), um den Lade- und/oder Entladezustand des Akkumulators zu bestimmen, indem die Benutzungszeit des Geräts gemessen wird,
- Einrichtungen (50) zum Rückstellen des Lade- und Entladezählers beim Auftritt eines aktiven Signals, das von der Akkumulatorswechsel-Erfassungsschaltung geliefert wird, wenn ein Akkumulatorwechsel erfasst wird.

2. Gerät nach Anspruch 1, **dadurch gekennzeichnet, dass** die Akkumulatorwechsel-Erfassungsschaltung (60) enthält:
- einen Kondensator (82),
- Schalteinrichtungen (70, 71), um den Kondensator mit dem Versorgungszugang zu verbinden, wenn ein Genehmigungssignal an die Akkumulatorwechsel-Erfassungsschaltung angelegt wird,
- einen Zugang (62), um einen logischen Wert "0" bzw. "1" zu liefern, wenn der Kondensator geladen oder entladen wird, wobei ein Übergang des logischen Werts von "0" nach "1" das aktive Signal bildet.

3. Verfahren zur Erfassung des Wechsels eines Akkumulators, der ein elektrisches Gerät nach Anspruch 2 versorgt, **dadurch gekennzeichnet, dass** das Verfahren die folgenden Schritte enthält:
- ein erstes Ablesen (K3) des logischen Werts am Zugang der Akkumulatorwechsel-Erfassungsschaltung,
- Anzeige des Vorhandenseins eines Akkumulators (K5), wenn der logische Wert gleich "1" ist,
- Liefern eines Impulses (K10), wenn der logische Wert gleich "0" ist,
- ein zweites Ablesen (K14) des logischen Werts am Zugang der Akkumulatorwechsel-Erfassungsschaltung nach dem Liefern des Impulses,
- Rücksetzung des Lade- und Entladezählers (K17), wenn der logische Wert gleich "1" ist,
- Anzeige des Nichtvorhandenseins eines Akkumulators (K20), wenn der logische Wert gleich "0" ist.

4. Computerprogrammprodukt für einen Mikroprozessor (50) in einem elektrischen Gerät nach Anspruch 2, wobei das Computerprogrammprodukt eine Einheit von Anweisungen enthält, die, wenn sie in den Computer geladen ist, es dem Mikroprozessor erlaubt, das Verfahren nach Anspruch 3 auszuführen.
